# EUROPEAN PATENT APPLICATION

(11) **EP 4 497 798 A1**
(43) Date of publication of application: **29.01.2025**
(21) Application number: 23306294.2
(22) Date of filing: 26.07.2023
(51) Int. Cl.: C09J 123/08, C09J 153/02

(54) **ADHESIVE COMPOSITION COMPRISING A MODIFIED TACKIFIER**

(71) Applicant: Bostik SA, 92700 Colombes (FR)
(72) Inventor: HE, Peipei, SHANGHAI, 201108 (CN); WU, Xiaojun, SHANGHAI, 201108 (CN)
(74) Representative: Arkema Patent

(57) **Abstract**

The present invention relates to an adhesive composition comprising:
- a polymer (A) ;
- a tackifying resin (B) comprising a modified resin (B1);
and its uses.

## Description

### TECHNICAL FIELD

The present invention concerns an adhesive composition comprising a polymer (A) and a tackifying resin comprising a modified rosin (B1), and its uses.

### TECHNICAL BACKGROUND

There exists different type of adhesives, which can be hot melt adhesives, pressure sensitive adhesives, water-based adhesive, reactive adhesive, etc...

These adhesives typically comprise a tackifier based on either rosin resins, terpene resins, hydrocarbon resins, and mixtures thereof. Hydrocarbon resins are based on a petroleum feedstock, rosin resins are typically based on a natural feedstock, gained from pine trees, terpene resins are generated from a natural source, wood turpentine or from the kraft sulphate pulping process.

In some application, rosin ester resin has much better performance than hydrocarbon resins due to broad compatibility with polymer, better wetting performance with low energy surface, it does have some advantage over hydrocarbon resin. But, it is well known that the price of rosin ester fluctuates greatly, and the supply is thus not stable. The high price and price fluctuation, unstable supply of rosin resins have a negatively impact on the adhesive producers.

There have been some attempts to use acid-modified petroleum resins in adhesive compositions. However, the change of tackifiers may impact the light stability, the thermal stability, the odor, the Gardner color, the compatibility with base polymers, the adhesive performances, ... of the adhesive compositions, which are not desirable for the users.

There is thus a need to provide new adhesive compositions that will overcome at least partially the above-mentioned drawbacks

More preferably, there is a need for an adhesive composition that is less costly than current adhesive compositions with rosin ester resins, and exhibits good adhesive properties such as for example high fiber tear percentage on a wide temperature range and/or good tack and peel properties

### DETAILED DESCRIPTION

The invention will now be described in more details without limitation in the following description.

Unless otherwise mentioned, the percentages in the present application are percentages by weight.

In the present text, the amounts indicated for a given species can apply to this species according to all its definitions (as mentioned in the present text), including the narrower definitions.

### A. Adhesive composition

The present invention concerns an adhesive composition comprising:
- a polymer (A) ;
- a tackifying resin (B) comprising a modified resin (B1).

### Polymer (A)

The polymer (A) may be selected from the group consisting of: polyolefin-based polymers, styrene block copolymers, polyurethanes, polyamides, acrylic-based copolymers, and mixtures thereof.

Any polyolefin-based polymers known in the art can be utilized in this invention.

Polyolefin-based polymers include both homopolymers and copolymers.

The polyolefin-based polymers are preferably selected from the group consisting of ethylene-based copolymers, amorphous poly-alpha-olefins (APAO), metallocene catalyzed polyolefins, olefin block copolymers.

The ethylene-based copolymers is preferably selected from the group consisting of ethylene-vinyl acetate copolymers (EVA), and ethylene-alkyl acrylate copolymers.

Ethylene vinyl-acetate copolymers (EVA) may be categorized by percent vinyl acetate (VA) content and melt flow rate (MFR) or melt index (MI). Most commonly used EVAs contain between about 19% and about 30% VA by weight. The MI values can range from about 3 to about 2500. EVA polymers are sold under trade names Elvax^{®} from DOW Chemical (former DuPont), Ateva^{®} from Celanese corporation, Nipoflex^{®} from Tosoh, and Greenflex^{®} from Distrupol, or EVATHENE^{®} UE653-04 from USI.

Preferably, the ethylene vinyl-acetate copolymer comprises a vinyl acetate content higher than or equal to 20% by weight.

The vinyl acetate content is typically the weight percentage of units derived from vinyl acetate in the ethylene vinyl acetate copolymer.

The ethylene vinyl-acetate copolymer has preferably a melt index greater than about 100 g/10 minutes, more preferably greater than 150 g/10 minutes, and even more preferably greater than 300 g/10 minutes.

Melt index of the ethylene vinyl-acetate copolymer is determined according to ASTM D1238 using a 2,16 kg weight load and a test temperature of 190°C.

As used herein, the terms "melt index" or "melt flow rate (MFR)" are used interchangeably.

The ethylene-alkyl acrylate copolymers typically comprise ethylene-methylacrylate, ethylene-ethylacrylate, or ethylene-butylacrylate copolymers.

Amorphous poly alpha olefins (APAOs) are typically produced on purpose using Ziegler-Natta catalysis and can be made using a variety of monomers, including, but not limited to, propylene, ethylene, butene, hexene, octene.

Examples of APAOs include, but are not limited to, amorphous (atactic) propylene (APP), amorphous propylene/ethylene (APE), amorphous propylene/butene (APB), amorphous propylene/hexene (APH), amorphous propylene/ethylene/butene. Various homopolymers, copolymers and terpolymers are produced by a number of manufacturers. They include Evonik Industries, who produce the Vestoplast^{®} polymers; REXtac, LLC, who produces the Rextac^{®} RT range of materials and Eastman Chemical, manufacturers of the Eastoflex^{®} line of polymers. They are all characterized by having a low degree of crystallinity as measured by DSC.

Metallocene catalyzed polyolefins, also called polyolefin elastomers, are made with metallocene catalysis technology. Examples of these metallocene polymers include Affinity^{®} and Engage^{®} polymers from Dow Chemical Company, L-MODU^{®} from Idemitsu (Japan). Metallocene polyolefin polymers are also supplied by several other companies, such as ExxonMobil Corporation (U.S.), LyondellBasel Industries Holdings B.V. (Netherlands), Chevron Phillips Chemical Company LLC (U.S.), Total SA (France), SABIC (Saudi Arabia), Japan Polychem Corporation Ltd, Braskem AG (Brazil), LG Chem Ltd. (South Korea), and others.

Olefin block copolymers (OBC) may be produced using a chain shuttling catalysis technology that produces a linear block structure of the monomers rather than a random polymer produced by Ziegler-Natta or traditional metallocene technology. OBCs are manufactured by Dow Chemical under the trade name of Infuse^{®}. OBCs can be crystallizable ethylene-octene blocks (hard) and amorphous ethylene-octene blocks (soft). The block structures give the polymer much better elevated temperature resistance and elasticity compared to a typical metallocene random polymer of similar density. While some of the grades of Infuse^{®} have low heat of fusion (approximately 20 Joules/gram) they would not be considered to be amorphous poly-alpha-olefins because the polymer architecture is completely different (i.e. block vs. random) and is specifically produced to have crystalline regions. Not only are they different on a structural basis, they are very different from a physical property standpoint with the OBCs having better elastic recovery, compression set and elevated temperature resistance.

Polyurethane may be prepared according to known method in the art for example in one or two steps. The reaction may be carried out in presence of a catalyst. Typical catalysts include organotins, tertiary amines, or zinc salts. It is typically prepared by reacting polyisocyanate with polyol. Polyurethanes may be prepared as disclosed in US5866656 or in US64651 04.

There also exists some commercial thermoplastic polyurethane. Mention may be made for example the series « ELASTOLLAN^{®} » commercialized by BASF, the series « Estane^{®} » commercialized by LUBRIZOL, the series « DESMOPANO » commercialized by COVESTRO or the series « Pellethane^{®} » commercialized by DOW. For example, there is Pellethane^{®} 2103-70A (more than 98% obtained from methylenediphenyldiisocyanate, 1,4-butanediol and polytetramethylene glycol), or Elastollan^{®} 1170 A10, 1175 A10W from BASF, FJ-146P from FWU JI RESINS CHEMICALS (polyester based aromatic thermoplastic polyurethane), Pearlbond^{™} 5717 NT2 commercialized by LUBRIZOL (polyester type thermoplastic polyurethane).

The acrylic-based copolymers may derived from monomers comprising: an alkyl methacrylate; an alkyl acrylate; a hydroxyalkyl acrylate or hydroxyalkyl methacrylate; or a vinyl ester or acid monomer.

Alkyl methacrylates can include alkyl methacrylates having 1 to about 20 carbon atoms in the alkyl group. For example, alkyl methacrylate can include methyl methacrylate, ethyl methacrylate, 2-ethylhexyl methacrylate, n-butyl methacrylate, sec-butyl methacrylate, tert-butyl methacrylate and dodecyl methacrylate.

Alkyl acrylates can include alkyl acrylates having 1 to about 20 carbon atoms in the alkyl group. For example, the alkyl acrylate can be selected from the group consisting of n-butyl acrylate, secbutyl acrylate, tert-butyl acrylate, 2-ethylhexyl acrylate, iso-bomyl acrylate, iso-bomyl methyl acrylate, ethyl acrylate, iso-octyl acrylate, decyl acrylate, and hexyl acrylate.

Hydroxyalkyl acrylate or hydroxyalkyl methacrylate can include, but not limited to, hydroxyethyl acrylate, hydroxyethyl methacrylate, hydroxypropyl acrylate, hydroxypropyl methacrylate, 4-hydroxybutyl acrylate and 4-hydroxybutyl methacrylate.

The vinyl ester can include vinyl acetate, vinyl propionate, vinyl butyrate, vinyl isobutyrate, vinyl valerate, and vinyl versatile.

The acid monomers can include, but not limited to, acrylic acid, methacrylic acid, itaconic acid, dimethacrylic acid, maleic acid, and fumaric acid.

The acrylic-based copolymers are for example sold by Arkema under the tradename of Flexcryl^{®} in a variety of ranges.

The styrene block copolymer is a copolymer comprising at least one styrene block, including styrene triblock copolymers and styrene diblock copolymers.

The styrene block copolymer has at least one A block that includes styrene and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof. The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks include, e.g., styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks include, e.g., butadiene (e.g., polybutadiene), isoprene (e.g., polyisoprene), 2,3-dimethyl-1,3-butadiene, 1,3-pentadiene, 1,3-hexadiene, and combinations thereof, and hydrogenated versions thereof including, e.g., ethylene, propylene, butylene and combinations thereof.

Suitable B block sesquiterpenes include, e.g., beta farnesene.

The styrene block copolymer has preferably an average styrene content of from 15% by weight to 45% by weight, more preferably from 15% by weight to 25% by weight.

The styrene block copolymer preferably comprises from 10% by weight to 80%, more preferably from 30% by weight to 70% by weight, and even more preferably from 40% by weight to 60% by weight diblock.

By *"diblock content"* is meant the weight proportion of diblock copolymers in the styrene block copolymer.

The styrene block copolymer is preferably selected from the group consisting of SB, SI, SEB, SEP, SBBS, SBS, SEBS, SEPS, SEEPS, SIBS, SIS, random-block SBR, random-block SIR and mixtures thereof.

Preferably, the styrene block copolymer is a SIS, a SI, or a mixturethereof.

By *"SBBS"* is meant a styrene-butadiene-butylene-styrene triblock copolymer. By *"SBS'* is meant a styrene-butadiene-styrene triblock copolymer. By *"SEBS'* is meant a styrene-ethylene-butylene-styrene triblock copolymer. By *"SEPS'* is meant a styrene-ethylene-propylene-styrene triblock copolymer. By *"SEEPS'* is meant a styrene-ethylene-ethylene-propylene-styrene triblock copolymer. By *"SIBS"* is meant a styrene-isoprene-butadiene-styrene triblock copolymer. By "SIS" is meant a styrene-isoprene-styrene triblock copolymer. By *"random-block SBR"* is meant random-block styrene butadiene copolymers (part of the styrene being present as polystyrene blocks). By *"random-block SIR"* is meant random-block isoprene butadiene copolymers (part of the styrene being present as polystyrene blocks). By *"SB"* is meant a styrene-butadiene diblock copolymer. By "*SI*" is meant a styrene-isoprene diblock copolymer. By *"SEB"* is meant a styrene-ethylene-butylene diblock copolymer. By *"SEP"* is meant a styrene-ethylene-propylene diblock copolymer.

Useful commercial styrene block copolymers include KRATON D and G ^{®} series from Kraton Polymers, EUROPRENE Sol T ^{®} series from Versalis (Eni group), SOLPRENE ^{®} series from Dynasol Elastomers, SINOPEC ^{®} series from SINOPEC and Taipol ^{®} and Vector^{®} series from TSRC Corporation. Other useful examples include:
- Sinopec^{®} YH-1126, a linear SIS triblock copolymer with a styrene content of 16 %, and a diblock content of 50 %;
- Sinopec^{®} YH-1209, a linear SIS triblock copolymer with a styrene content of 30 %, and a diblock content of less than 1 %;
- Kraton^{®} D1152, a mixture of linear SBS triblock and SB diblock copolymers, with a styrene content of 29.5 % by weight relative to the total weight of the mixture, an average molecular weight of around 122 000 g/mol, a melt flow index or MFI (measured according to ISO1133) of 8.5 grams/ 10 minutes at 200°C under a load of 5 kilograms, and a SB diblock content of around 17 % by weight relative to the total weight of the mixture.
- Kraton^{®} D1161, a mixture of linear SIS triblock and SI diblock copolymers, with a styrene content of 15 % by weight relative to the total weight of the mixture, an MFI (measured according to ISO1133) of 9 g/10 min at 200°C under a load of 5 kg, an average molecular weight of around 220 000 g/mol, and a SI diblock content of around 19 % by weight relative to the total weight of the mixture.
- Taipol^{®} SBS 4202 from TSRC Corporation, a linear SBS triblock copolymer with a styrene content of 40 % by weight relative to the total weight of the triblock copolymer, an MFI (measured according to ASTM D1238) of 3 to 10 g/10 min at 190°C under a load of 5 kg, an average molecular weight of around 102 400 g/mol.
- Vector^{®} 4411 from TSRC Corporation, a linear SIS triblock copolymer with a styrene content of 44 % by weight relative to the total weight of the triblock copolymer, an MFI (measured according to ASTM D1238) of 40 g/10 min at 200°C under a load of 5 kg, an average molecular weight of around 106 000 g/mol.
- Europrene^{®} SOL TE9326 (linear SIS triblock copolymer, styrene block content of about 30 %, diblock content of about 15 % from Versalis.

Preferably, the polymer (A) has a weight average molecular weight higher than 5 000 g/mol, more preferably higher than or equal to 10 000 g/mol. More preferably, it has a molecular weight higher than or equal to 15 000 g/mol.

Preferably, the polymer (A) has a melt flow index (MI measured according to ISO1133) higher than 6 g/10 min, more preferably higher than 25 g/10 min, and even more preferably higher than 150 g/ 10 min.

The polymer (A) is preferably selected from the group consisting of: ethylene-vinyl acetate copolymers (EVA), styrene block copolymers, and mixtures thereof. More preferably, the polymer (A) is a styrene block copolymer. Even more preferably, it is a SIS, a SI or a mixture thereof.

The adhesive composition may comprise from 10% to 70% by weight of a polymer (A) (or a mixture of polymers (A)), preferably from 15% to 50% by weight, and more preferably from 20% to 40% by weight of a polymer (A) (or a mixture of polymers (A)) based on the total weight of the adhesive composition.

### Tackifying resin (B)

The adhesive composition comprises a tackifying resin (B) comprising a modified resin (B1).

The terms "tackifier" and "tackifying resin" are used interchangeably.

### Modified resin (B1)

According to the invention, the modified resin (B1) is a rosin or rosin ester which is modified with petroleum resin.

The modified resin (B1) is preferably not hydrogenated.

The modified resin (B1) has preferably an acid value ranging from 5 to 32 mg KOH/g, more preferably from 10 to 30 mg KOH/g, and even more preferably from 12 to 20 mg KOH/g. The acid value is measured according to standard GB/T 2895-2008.

The modified resin (B1) has preferably a softening point ranging from 80°C to 120°C, more preferably from 90°C to 100°C. The softening point is measured according to standard GB/T 15332-1994.

The modified resin (B1) preferably has a melt viscosity at 150°C lower than or equal to 5 000 mPas, more preferably lower than or equal to 2000 mPas, even more preferably ranging from 500 to 1 500 mPas. The melt viscosity is measured according to standard GB/T 2794-2013.

The modified resin (B1) has preferably an average molecular weight (Mw) lower than or equal to 10 000 g/mol, more preferably lower than or equal to 5 000 g/mol, and even more preferably lower than or equal to 2 000 g/mol.

Mw is measured by GPC using polystyrene as standard. More particularly, the measure is performed on Waters e2695 GPC instrument with IR and UV detectors, using polystyrene with different molecular weight to build a calibration curve (with calibration range from 600-300000 g/mol) with the following conditions: 0.1g sample is dissolved in 10ml THF and 0.01ml toluene, the solution is filtered with 0.45 µm filter and injected into 2 ml vial into the instrument for analysis.

Preferably, the modified resin (B1) has a Gardner color lower than 6, more preferably ranging from 1 to 5. Gardner color is measured according to standard ASTM D1544 - 04.

The modified resin (B1) is preferably prepared by reacting (or preferably derived from):
i) a rosin resin, a polyol, and a petroleum resin; or
ii) a rosin ester resin and a petroleum resin.

The reaction i) and ii) may be carried out in presence of a catalyst.

The reaction i) and ii) may be carried out at a temperature ranging from 220°C to 270°C, preferably from 250°C to 270°C.

The reaction i) and ii) may be carried out for 1h to 12 h, preferably from 5h to 8h.

In reaction i), the weight ratio rosin resin : petroleum resin preferably ranges from 99 : 1 to 55:45.

In reaction ii), the weight ratio rosin ester resin: petroleum resin preferably ranges from 99 : 1 to 55 : 45.

The rosin resin may be any rosin resin known by the skilled person. The rosin may be any natural or modified rosin. Preferably, the rosin resin is selected from the group consisting of gum rosins, wood rosins, tall-oil rosins, distilled rosins, dimerized rosins, polymerized rosins, and their mixtures.

Rosin resins include non-hydrogenated resins, totally hydrogenated resins, and partially hydrogenated resins.

More preferably, the rosin resin is a gum rosin.

The polyol contains 2 or more hydroxyl groups.

The polyol is preferably selected from the group consisting of diols, triols, tetrols, pentols, hexols, and mixtures thereof.

In case of mixtures, if a diol is present within the mixtures, its weight content based on the sum of the weight contents of all the polyols, is lower than 20 wt%, even more preferably lower than 10 wt %.

The diol may be selected from the group consisting of glycol, propylene glycol, butanediol, and mixtures thereof.

The triol may be selected from the group consisting of glycerol, trimethylolpropane, and mixtures thereof.

The tetrol may be selected from the group consisting of pentaerythritol, tetraglyol, and mixtures thereof.

Preferably, the polyol is selected from triols, tetrols and mixtures thereof, such as for example glycerol, pentaerythritol, and more preferably the polyol is a tetrol such as pentaerythritol.

The petroleum resin is preferably selected from the group consisting of:
- C5 resin;
- C9 resin;
- C5/C9 resin;
- DCPD resin;
- mixtures thereof.

The term "C5 resin" as used herein means aliphatic C5 hydrocarbon resins that are produced from the polymerization of monomers comprising C5 and/or C6 olefin species boiling in the range from about 20° C to about 200° C. at atmospheric pressure. These monomers are typically generated from petroleum processing, e.g. cracking. The aliphatic C5 hydrocarbon resins can be produced by any method known in the art. The aliphatic C5 hydrocarbon thermoplastic resins may be prepared by cationic polymerization of a cracked petroleum feed containing C5 and C6 paraffins, olefins, and diolefins also referred to as "C5 monomers." These monomer streams are comprised of cationically polymerizable monomers such as for example 1,3-pentadiene which is the primary reactive component along with cyclopentene, pentene, 2-methyl-2-butene, 2-methyl-2-pentene, cyclopentadiene, and dicyclopentadiene. The polymerizations are typically catalyzed using Friedel-Crafts polymerization catalysts such as Lewis acids (e.g., boron trifluoride (BF3), complexes of boron trifluoride, aluminum trichloride (AlCl3), and alkyl aluminum chlorides). In addition to the reactive components, nonpolymerizable components in the feed may include saturated hydrocarbons that are in some instances co-distilled with the unsaturated components such as pentane, cyclopentane, or 2-methylpentane. Solid acid catalysts can also be utilized to produce aliphatic C5 hydrocarbon resins. Aliphatic C5 hydrocarbon resins include non-hydrogenated, partially hydrogenated, or fully hydrogenated resins. Aliphatic C5 thermoplastic resins can be obtained as Piccotac^{®} C5 and Eastotac^{®} C5 H2 thermoplastic resins from Eastman Chemical Company (Kingsport, Tenn., US).

The term "C5/C9 resin" as used herein means an aliphatic/aromatic hydrocarbon C5/C9 resin that is produced from the polymerization of monomers comprising at least one unsaturated aromatic C8, C9, and/or C10 species boiling in the range from about 100° C to about 300° C at atmospheric pressure and at least one monomer comprising C5 and/or C6 olefin species boiling in the range from about 20° C to about 200° C at atmospheric pressure. C5 and/or C6 species typically include paraffins, olefins, and diolefins also referred to as "C5 monomers." These monomer streams are typically comprised of cationically polymerizable monomers such as 1,3-pentadiene which is the primary reactive component along with cyclopentene, pentene, 2-methyl-2-butene, 2-methyl-2-pentene, cyclopentadiene, and dicyclopentadiene. Unsaturated aromatic C8, C9, and/or C10 monomers are derived from petroleum distillates resulting from naphtha cracking and are referred to as "C9 monomers." These monomer streams are comprised of cationically polymerizable monomers such as styrene, alpha methyl styrene, beta-methyl styrene, vinyl toluene, indene, dicyclopentadiene, divinylbenzene, and other alkyl substituted derivatives of these components. The cationic polymerization may be catalyzed using Friedel-Crafts polymerization catalysts such as Lewis acids (e.g., boron trifluoride (BF3), complexes of boron trifluoride, aluminum trichloride (AlCl3), and alkyl aluminum chlorides). Solid acid catalysts may also be utilized to produce aliphatic/aromatic C5/C9 hydrocarbon resins. In addition to the reactive components, non-polymerizable components may include, aromatic hydrocarbons such as xylene, ethyl benzene, cumene, ethyl toluene, indane, methylindane, naphthalene and other similar specifies. The non-polymerizable components of the feed stream are in some embodiments incorporated into the thermoplastic resins via alkylation reactions. Aliphatic/aromatic C5/C9 hydrocarbon resins include non-hydrogenated, partially hydrogenated resins, and hydrogenated resins. Aliphatic/aromatic C5/C9 resins can be obtained as Piccotac^{®} thermoplastic resin from Eastman Chemical Company. The proportion of C5 to C9 is not limited. In other words, the amount of C5 monomer in the C5/C9 thermoplastic resin can be anywhere from 0.1 to 100% and vice versa the amount of C9 monomer in the C5/C9 thermoplastic resin can be from 0.1 to 100%.

The term "C9 resin" as used herein means an aromatic C9 hydrocarbon thermoplastic resin that is a resin produced from the polymerization of monomers comprising unsaturated aromatic C8, C9, and/or C10 species boiling in the range from about 100° C to about 300° C at atmospheric pressure. These monomers are typically generated from petroleum processing, e.g. cracking. The aromatic C9 hydrocarbon resins can be produced by any method known in the art. Aromatic C9 hydrocarbon resins may be prepared by cationic polymerization of aromatic C8, C9, and/or C10 unsaturated monomers derived from petroleum distillates resulting from naphtha cracking and are referred to as "C9 monomers." These monomer streams are typically comprised of cationically polymerizable monomers such as for example styrene, alpha methyl styrene (AMS), beta-methyl styrene, vinyl toluene, indene, dicyclopentadiene, divinylbenzene, and other alkyl substituted derivatives of these components. Aliphatic olefin monomers with four to six carbon atoms are also present during polymerization in some embodiments of C9 resins. The polymerization may be catalyzed using Friedel-Crafts polymerization catalysts such as Lewis acids (e.g., boron trifluoride (BF3), complexes of boron trifluoride, aluminum trichloride (AlCl3), and alkyl aluminum chlorides). In addition to the reactive components, nonpolymerizable components include, but are not limited to, aromatic hydrocarbons such as for example xylene, ethyl benzene, cumene, ethyl toluene, indane, methylindane, naphthalene, and other similar chemical species. The nonpolymerizable components of the feed stream are in some embodiments incorporated into the thermoplastic resins via alkylation reactions. C9 hydrocarbon resins include non-hydrogenated, partially hydrogenated, or fully hydrogenated resins. Aromatic C9 hydrocarbon resins can be obtained as Picco^{®} C9 thermoplastic resin, and aliphatic hydrogenated and aliphatic/aromatic partially hydrogenated C9 H2 hydrocarbon thermoplastic resins can be obtained as Regalite^{®} thermoplastic resin from Eastman Chemical Company.

The term "DCPD resin" as used herein means dicyclopentadiene (DCPD) resin, most commonly formed through ring opening metathesis polymerization (ROMP) of dicyclopentadiene in the presence of a strong acid catalyst, such as for example maleic acid or aqueous sulphuric acid, or thermal polymerization. Dicyclopentadiene is also formed in some embodiments by a Diels Alder reaction from two cyclopentadiene molecules and exists in two stereo-isomers: endo-DCPD and exo-DCPD. Typically, greater than 90% of the DCPD molecules present in commercial grades of DCPD are in the endo form. DCPD resins include aromatic-modified DCPD resins as well as hydrogenated, partially hydrogenated, and non-hydrogenated resins, though in most instances herein only H2 DCPD is described since it is the most readily commercially available form of DCPD. Aromatic-modified DCPD is also contemplated as a DCPD thermoplastic resin. Aromatic modification is, for instance, by way of C9 resin oil, styrene, or alpha methyl styrene (AMS), and the like. Hydrogenated and partially hydrogenated DCPD and hydrogenated and partially hydrogenated aromatic-modified DCPD resin is commercially available as Escorez^{®} 5000-series resin (ExxonMobil Chemical Company, TX, US).

Preferably, the petroleum resin is not a DCPD resin.

Preferably, the petroleum resin is not hydrogenated.

Preferably, the petroleum resin is not acid-modified, such as for example modified with maleic anhydride.

More preferably, the petroleum resin is selected from C5 resins, C9 resins, and C5/C9 resins.

Commercial examples of petroleum resins are Escorez^{®}5400 which is a hydrogenated dicyclopentadiene resin available from ExxonMobil Chemical with a softening temperature of 100°C; Quintone^{®} DX390N sold by Zeon Company which is a non-hydrogenated aliphatic/aromatic petroleum hydrocarbon resin, having a softening point of 90C ; Sukorez^{®}SU400 sold by Kolon Company which is a hydrogenated aliphatic/aromatic petroleum hydrocarbon resin; HH2-1003 sold by Henghe Materials and Science Technology Co. LTD (C5/C9 petroleum hydrocarbon resin); M-90Z sold by Luha which is a C5/C9 petroleum hydrocarbon resin ; Escorez^{®} 2203LC (resin C5/C9) sold by ExxonMobil Chemical ; Sukorez^{®} SU 120 sold by ExxonMobil Chemical (resin DCPD fully hydrogenated).

The rosin ester resin may be glycol, glycerol and/or pentaerythritol esters of natural and modified rosins (typically as described above). It includes their hydrogenated versions.

Preferably, the rosin esters are the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin.

More preferably, the rosin ester is the pentaerythritol or glycerol ester of gum rosin.

Commercial examples of rosin ester are Sylvalite^{®} RE 100L ou RE 100S (pentaerythritol based tall-oil rosin ester), Sylvalite^{®} RE 85L (a glycerol ester of tall oil rosin) from Kraton; Sylvalite^{®}9000 from Kraton (fully hydrogenated tall oil rosin ester).

The modified resin (B1) can also be purchased from some suppliers in the market, such as KOMOTAC^{®} KE100H provided by Guangdong KOMO Co., Ltd.

More preferably, the modified resin (B1) is prepared by reacting (or derived from):
- i) a gum rosin, a polyol selected from glycerol or pentaerythritol, and a petroleum resin selected from C5 resins, C9 resins, and C5/C9 resins, said petroleum resin being preferably not hydrogenated; or
- ii) a rosin ester resin based on glycerol or pentaerythritol, and a petroleum resin selected from C5 resins, C9 resins, and C5/C9 resins, said petroleum resin being preferably not hydrogenated.

Preferably, the modified resin (B1) does not comprise groups derived from anhydride maleic, maleic acid.

Preferably, the modified resin (B1) is not acid-modified, and more preferably is not maleic acid-modified or maleic anhydride-modified.

### Additional tackifier(s)

The tackifying resin (B) may further comprise (in addition to tackifier (B1)):
- a petroleum resin (B2); or
- a rosin resin (B3); or
- a rosin ester resin (B4); or
- a mixture thereof.

The description above for the rosin resin, rosin ester resin and petroleum resin applies herein for tackifiers (B2), (B3), and (B4).

The tackifying resin (B) may comprise from 40% to 100%, preferably from 60% to 100 %, more preferably from 80% to 100%, by weight of modified resin (B1) relative to the total weight of the tackifying resin (B).

The adhesive composition preferably comprises from 1% to 70% by weight, more preferably from 10% to 60% by weight, and even more preferably from 20% to 60% by weight of tackifying resin (B), based on the total weight of the adhesive composition.

### Plasticizer (C1)

The adhesive composition may further comprise a plasticizer (C1).

Any plasticizer known to a person skilled in the art may be used.

The plasticizer (C1) may be selected from the group consisting of: olefin oligomers, low molecular weight polyolefins such as liquid polybutene, low molecular weight non-aromatic polymers, phthalates, mineral oils, waxes, vegetable and animal oils and derivatives thereof.

The plasticizer (C1) includes polyethylenes, polypropylenes, polybutenes, polyisobutylenes, hydrogenated polyisoprenes, hydrogenated polybutadienes, or the like having average molecular weight between about 350 g/mole and about 10 000 g/mole.

The mineral oil is preferably selected in the group consisting of naphthenic oils, paraffinic oils or any mixture thereof.

Naphthenic oils and paraffinic oils are petroleum based oils which consists in a mixture of naphthenic hydrocarbons (aliphatic, saturated or unsaturated, C₄ to C₇-member hydrocarbon rings, and preferably aliphatic, saturated or unsaturated, C₄ to C₆-member rings; by way of example, mention may be made of cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic, and preferably aromatic C₆-member hydrocarbon rings).

The classification of naphthenic and paraffinic oil is made based on the amount of each type of hydrocarbons in the oil. Typically, paraffinic oils have a paraffinic hydrocarbons content of at least 50% by weight; naphthenic oils have a naphthenic hydrocarbons content between 30% and 40% by weight, relative to the total weight of the mineral oil.

Examples of commercial mineral oils are naphthenic oils from NYNAS sold under the trade names NYFLEX^{®} 223 and NYFLEX^{®} 222B or of the naphthenic oil from Karamay sold under the trade name KN4010.

Suitable vegetable and animal oils include glycerol esters of the usual fatty acids and derivative products thereof.

Waxes may be selected from the group consisting of petroleum waxes such as for example paraffin waxes, Fischer-Tropsch waxes, ethylene-vinyl acetate (EVA) waxes, polyolefin waxes, and any mixture thereof.

By *"paraffin wax"* is meant a wax derived from crude oil. It generally consists of a complex mixture of hydrocarbons with the following general properties: nonreactive; nontoxic; good water barrier; clean-burning fuel; colorless. Paraffin waxes are characterized by a clearly defined crystal structure. The melting point of paraffin waxes generally falls between about 43 and about 71°C. Paraffin waxes often contain a large amount of straight-chain hydrocarbons, and can also contain branched hydrocarbons, such as isoparaffins and other branched materials, and cycloalkanes, such as cycloparaffins and other cyclo-containing materials.

By *"Fischer-Tropsch wax"* is meant a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, normally an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature (*"AET"*).

By *"EVA wax"* is meant oligomeric polymer compounds that are prepared via a process comprising the co-polymerization of ethylene monomers and vinyl acetate monomers and that have the following properties: (a) solid at room temperature; (b) low melting point; and (c) insoluble in water. The EVA copolymers of the EVA wax may be functionalized or modified in any possible manner.

As used herein, the term "polyolefin wax" refers to those polymeric or long-chain entities comprised of olefinic monomer units. This type of materials is commercially available from Westlake Chemical Corporation, Houston, TX under the tradename designation "Epolene" and from Honeywell Corporation, Morristown, NJ under the trade name designation "A-C".

The wax may be a commercially available wax. Examples of commercially available waxes suitable for the present invention include Fischer-Tropsch waxes from Shell sold under the trade names SX60S, which has a congealing point of 58-62°C, SX70S, which has a congealing point of 67-72°C, SX80S, which has a congealing point of 78-85°C and SX105, which has a congealing point of 101-108°C, and from Sasol sold under the trade name C-80M, which has a congealing point of 80-85°C. Other examples are 64# paraffin wax from Sinopec, having a melting point of 64-66°C and the EVA wax from Honeywell sold under the trade name AC-400A, having a vinyl acetate content of 13 % by weight, a dropping point of 92°C and a viscosity at 140°C of 595 mPa.s.

Preferably the plasticizer (C1) in the adhesive composition is selected from mineral oils or waxes.

The adhesive composition may comprise from 0% to 50% by weight of a plasticizer (C1), preferably from 1% to 40% by weight, more preferably from 5% to 20% by weight based on the total weight of the adhesive composition.

### Antioxidant (C2)

The adhesive composition may comprise an antioxidant (C2).

The adhesive composition comprises from about 0 to about 5%, preferably from 0 to about 3%, more preferably from about 0.1 to about 3%, more preferably from about 0.1 to 2%, by weight of an antioxidant, based on the total weight of the adhesive composition.

Suitable antioxidants are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP); and (2) chelating agents and metal deactivators as, for example, ethylenediaminetetraacitic acid, salts thereof and disalicylalpropylenediimine.

Suitable antioxidants include those commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon, I'Irganox PS800 from BASF.

### Other additives (C3)

The adhesive composition may further comprise at least one other additive, preferably in an amount of from 0 to 10 %, for example from 0.1 to 10 %, by weight, by total weight of the adhesive composition.

The additives may be selected from the group consisting of inert colorants (e.g. titanium dioxide), fillers (e.g. talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, crosslinking agents, nucleating agents, reactive compounds, fire-retardant mineral or organic agents, ultraviolet (UV) or/and infrared (IR) light absorbing agents (for example HALS hindered amine light stabilizers), UV or/and IR fluorescing agents, and mixtures thereof. These optional other additives are well known in this art.

The type of additives depends typically of the final application of the adhesive composition.

Preferably, the adhesive composition does not comprise polycaprolactones.

### Adhesive composition

The adhesive composition may be a hot melt adhesive composition, a pressure-sensitive adhesive composition (PSA), a hot melt pressure adhesive composition (HMPSA).

Pressure-sensitive adhesives (PSAs) are substances that give the support layer which is coated therewith an immediate tack at ambient temperature (23°C). This immediate tack enables the instantaneous adhesion of said self-adhesive support to all types of substrates, under the effect of a gentle and brief pressure. PSAs are widely used for the manufacture of self-adhesive labels which are attached to articles (for example packaging) for the purpose of presenting information (such as barcode, name, price) and/or for decorative purposes. PSAs are also employed in the manufacture of self-adhesive tapes of varied uses. Mention may be made, for example, besides the transparent adhesive tape widely used in daily life, of the forming and the assembling of cardboard packagings; the protection of surfaces for painting operations, in the building industry; the maintenance of electric cables in the transportation industry: the adhesive bonding of fitted carpets by double-sided adhesive tapes.

Hot-melt adhesives or hot melts (HMs) are substances that are solid at ambient temperature (23°C) and contain neither water nor solvent. They are applied in the melt state and solidify on cooling, thus forming a joint which, due to its adhesive strength, attaches the substrates to be assembled. Certain hot melts are formulated in such a way as to give the support coated therewith a relatively hard and tack-free character. Other hot melts provide the support with a relatively soft character and a high tack; these are PSAs which are widely used for the manufacture of self-adhesive articles (for example self-adhesive labels). The corresponding adhesives are denoted by the designation "hot-melt pressure-sensitive adhesives" (or HMPSA). HMPSA are thus a different category than hot melt. HM. They therefore also make it possible, owing to their adhesive strength, to firmly attach the label or the tape to the desired substrate, whether it is for example packaging to be labeled or board to be assembled.

Preferably, the adhesive composition is a hot melt pressure sensitive adhesive composition or a hot melt adhesive composition.

In one embodiment, if the adhesive composition is a hot melt pressure sensitive adhesive composition, it preferably comprises:
- from 10% to 70% by weight of a polymer (A), said polymer (A) being selected from styrene block copolymers ;
- from 1% to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

In another embodiment, if the adhesive composition is a hot melt adhesive composition, it preferably comprises:
- from 10% to 70% by weight of a polymer (A), said polymer (A) being selected from ethylene-based copolymers ;
- from 1% to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

In another embodiment, the adhesive comprises:
- from 10% to 70% by weight of a polymer (A), said polymer (A) being selected from amorphous poly-alpha-olefins ;
- from 1 % to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

In another embodiment, if the adhesive composition is a hot melt adhesive composition, the adhesive comprises:
- from 10% to 70% by weight of a polymer (A), said polymer (A) being selected from polyurethanes ;
- from 1% to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

The adhesive composition preferably has a viscosity at 170°C ranging from 500 to 10 000 mPas, more preferably ranging from 600 to 8 000 mPas. The viscosity is measured according to standard GB/T 2794-2013.

The adhesive composition preferably has a softening point ranging from 80°C to 120°C. The softening point is measured according to GB/T 15332-1994.

The adhesive composition of the invention advantageously exhibits good adhesive properties (such as for example a good comprise between 180° peel and loop tack, or even high fiber tear on a wide temperature range).

The adhesive composition of the invention advantageously exhibits low odor, low cost, low color, combined with good adhesive performances (adhesion, fiber tear...).

### B. Process for preparing the adhesive composition

The invention also relates to a process for preparing the adhesive composition as described above.

The adhesive composition of the present invention may be produced using any of the techniques known in the art.

For example, the adhesive composition may be prepared by mixing the polymer (A), the tackifying resin (B) in the molten state. Optional other ingredients or additives of the composition, as described above, in particular the at least one antioxidant, may be mixed with the above-mentioned components. Another process for preparing the adhesive composition, will be the addition of the tackifying resin (B) to the polymer (A) optionally in presence of plasticizer or other additives.

Preferably, the step of mixing is carried out at a temperature of from 140 to 180°C. The ingredients are preferably mixed for at least 1 hour.

The adhesive composition according to the invention can be prepared in presence of dioxygen (such as under air atmosphere), or preferably under inert atmosphere e.g. under carbon dioxide or nitrogen to limit potential degradation by oxidative reactions.

### C. Uses

The present invention relates to the use of the adhesive composition as defined herein for bonding two substrates together, or as a coating on the surface of a substrate.

The adhesive composition can be used in various applications, including but not limited to disposables articles, packaging (e.g cases, cartons, trays, ...), converting, laminates, pressure sensitive adhesives, tapes, labels, assembling, bookbinding, wood bonding (e.g. edge banding, profile wrapping, ...), transportation, reflective coatings, road marking, and the like.

The adhesive composition as defined above may be applied to any substrate. Preferred substrates include wood, paper, cardboard, plastic, thermoplastic, rubber, metal, metal foil (such as aluminum foil and tin foil), metallized surfaces, cloth, non-wovens (particularly polypropylene spun bonded fibers or non-wovens), spunbonded fibers, cardboard, stone, plaster, glass (including silicon oxide (SiOx) coatings applied by evaporating silicon oxide onto a film surface), foam, rock, ceramics, films, polymer foams (such as polyurethane foam), substrates coated with inks, dyes, pigments, PVDC and the like or combinations thereof.

In a particular embodiment, the adhesive composition of the invention can be used in a packaging article. The packaging article may be useful as a carton, container, crate, case, corrugated case, or tray, for example. More particularly, the packaging article may be useful as a cereal product, cracker product, beer packaging, frozen food product, paper bag, drinking cup, milk carton, juice carton, drinking cup, or as a container for shipping produce, just to name a few exemplary uses.

The packaging article is formed by applying an adhesive composition to at least a portion of one or more packaging elements. The packaging elements may be formed from paper, paperboard, containerboard, tagboard, corrugated board, chipboard, kraft, cardboard, fiberboard, plastic resin, metal, metal alloys, foil, film, plastic film, laminates, sheeting, or any combination thereof. In one aspect, the adhesive composition may be used to bind or bond two or more packaging elements together wherein the packaging elements are formed from the same or different type of materials. Accordingly, the packaging elements may be individually formed from paper, paperboard, containerboard, tagboard, corrugated board, chipboard, kraft, cardboard, fiberboard, plastic resin, metal, metal alloys, foil, film, plastic film, laminates, sheeting, or any combination thereof. The one or more packaging elements may also be individually coated using paper, foil, metal, metal alloys, polyethylene, polypropylene, polyester, polyethylene terephthalate, polyvinyl chloride, polyvinylidine chloride, polyvinyl acetate, polyamides, homopolymers thereof, and combinations and copolymers thereof.

The adhesive composition of this invention can be used to make adhesive tapes or alternately to adhere labels to various items (e.g. containers, magazines, etc.). The label/tape can be selected from a variety of materials including paper, non-paper films (e.g. polypropylene (e.g. polypropylene (PP), oriented polypropylene (OP), and biaxially oriented polypropylene (BOPP)), polyethylene, etc.). The container can be metal (e.g. aluminum or steel) or plastic (polyethylene terephthalate (PET), high density polyethylene (HDPE) and polypropylene. The label can be a spot label i.e. a label that does not extend completely around the container. Alternatively, the label can be a wraparound label i.e. a label that completely wraps around the entire container. If the label is a wraparound label, it can be roll fed into the applicator. Alternatively, the labels are pre-cut and fed in from a stack. In a wraparound label application method, the label stock is fed into a label station. A pick-up adhesive and a lap glue are then applied to the label, often from the same glue pot. A pick-up adhesive adheres the leading edge of the label to a container. The lap glue then bonds the overlap where the wrap around label overlaps itself.

The adhesive composition is also useful in a variety of applications and constructions including, e.g., disposable absorbent articles including, e.g., disposable diapers, adult incontinence products, sanitary napkins, medical dressings (e.g., wound care products) bandages, surgical pads, pet training pads (e.g. puppy pads) and meat-packing products and components of absorbent articles including, e.g., an absorbent element, absorbent cores, impermeable layers (e.g., backsheets), tissue (e.g., wrapping tissue), acquisition layers and woven and nonwoven web layers (e.g., top sheets, absorbent tissue) and elastics. The adhesive composition is useful on substrates made from a variety of fibers including, e.g., natural cellulose fibers (e.g. wood pulp, cotton, viscose, starch, etc.), silk, PLA(poly lactic acid), PHA(poly hydroxyl alkanoates), PBS(poly butylene succinate), PBAT (poly butylene adipate terephthalate) and wool; synthetic fibers such as nylon, rayon, polyesters, acrylics, polypropylenes, polyethylene, polyvinyl chloride, polyurethane, and glass; recycled fibers, and various combinations thereof. The hot melt adhesive composition is useful on a variety of films including polyethylene, polypropylene, ethylene vinyl acetate, ethylene copolymer, bio-based films (e.g. PLA, PHA, starch, etc.). Various application techniques can be used to apply the composition to a substrate including, e.g., slot coating, spraying including, e.g., spiral spraying and random spraying, screen printing, foaming, engraved roller, extrusion and melt blown application techniques.

In disposable article, the adhesive composition can be used as elastic attachment adhesive, positioning adhesive, and/or core stabilization adhesive.

The adhesive composition can be used in woodworking processes. A woodworking process involves forming a woodworking article by applying an adhesive composition to at least a portion of a structural element. The structural element can include a variety of materials, which include, but are not limited to wood or plywood, or plastic or veneer. For example, the structural element can also include lumber, wood, fiberboard, plasterboard, gypsum, wallboard, plywood, PVC, melamine, polyester, impregnated paper and sheetrock. A woodworking process can be used to form indoor furniture, outdoor furniture, trim, molding, doors, sashes, windows, millwork and cabinetry, for example.

The present invention also relates to an article comprising the adhesive composition as defined herein.

The article may be selected from the group consisting of a tape, a label, a case, a carton, a bag, and a disposable absorbent article.

### ASPECTS

Aspect 1 : Adhesive composition comprising:
- a polymer (A) ;
- a tackifying resin (B) comprising a modified resin (B1).

Aspect 2 : Adhesive composition according to aspect 1, wherein the polymer (A) is selected from the group consisting of: polyolefin-based polymers, styrene block copolymers, polyurethanes, polyamides, acrylic-based copolymers, and mixtures thereof.

Aspect 3 : Adhesive composition according to aspect 2, wherein the polyolefin-based polymers are selected from the group consisting of ethylene-based copolymers, amorphous poly-alpha-olefins (APAO), metallocene catalyzed polyolefins, olefin block copolymers.

Aspect 4 : Adhesive composition according to aspect 2, wherein the styrene block copolymer is preferably selected from the group consisting of SB, SI, SEB, SEP, SBBS, SBS, SEBS, SEPS, SEEPS, SIBS, SIS, random-block SBR, random-block SIR and mixtures thereof. Aspect 5 : Adhesive composition according to aspect 4, wherein the styrene block copolymer is a SIS, a SI, or a mixture thereof.

Aspect 6 : Adhesive composition according to anyone of aspects 1 to 5, wherein the polymer (A) has a weight average molecular weight higher than or equal to 15 000 g/mol.

Aspect 7: Adhesive composition according to anyone of aspects 1 to 6, wherein the polymer (A) is selected from the group consisting of: ethylene-vinyl acetate copolymers (EVA), styrene block copolymers, and mixtures thereof.

Aspect 8: Adhesive composition according to anyone of aspects 1 to 7, wherein it comprises from 10% to 70% by weight of a polymer (A) (or a mixture of polymers (A)), preferably from 15% to 50% by weight, and more preferably from 20% to 40% by weight of a polymer (A) (or a mixture of polymers (A)) based on the total weight of the adhesive composition.

Aspect 9: Adhesive composition according to anyone of aspects 1 to 8, wherein the modified resin (B1) is not hydrogenated.

Aspect 10: Adhesive composition according to anyone of aspects 1 to 9, wherein the modified resin (B1) has an acid value ranging from 5 to 32 mg KOH/g, preferably from 10 to 30 mg KOH/g, and more preferably from 12 to 20 mg KOH/g.

Aspect 11: Adhesive composition according to anyone of aspects 1 to 10, wherein the modified resin (B1) has a melt viscosity at 150°C lower than or equal to 5 000 mPas, preferably lower than or equal to 2000 mPas, more preferably ranging from 500 to 1 500 mPas.

Aspect 12: Adhesive composition according to anyone of aspects 1 to 11, wherein the modified resin (B1) has an average molecular weight (Mw) lower than or equal to 10000 g/mol, preferably lower than or equal to 5 000 g/mol, and more preferably lower than or equal to 2 000 g/mol.

Aspect 13: Adhesive composition according to anyone of aspects 1 to 12, wherein the modified resin (B1) has a Gardner color lower than 6, preferably ranging from 1 to 5.

Aspect 14 : Adhesive composition according to anyone of aspects 1 to 13, wherein the modified resin (B1) is prepared by reacting :
iii) a rosin resin, a polyol, and a petroleum resin; or
iv) a rosin ester resin and a petroleum resin.

Aspect 15: Adhesive composition according to aspect 14, wherein:
- in reaction i), the weight ratio rosin resin : petroleum resin ranges from 99 : 1 to 55:45;
- in reaction ii), the weight ratio rosin ester resin: petroleum resin ranges from 99 : 1 to 55 : 45.

Aspect 16: Adhesive composition according to anyone of aspect 14 or 15, wherein the rosin resin is selected from the group consisting of gum rosins, wood rosins, tall-oil rosins, distilled rosins, dimerized rosins, polymerized rosins, and their mixtures, the rosin resin being preferably a gum rosin.

Aspect 17: Adhesive composition according to anyone of aspects 14 to 16, wherein the polyol is selected from triols, tetrols and mixtures thereof, such as for example glycerol, pentaerythritol, and more preferably the polyol is a tetrol such as pentaerythritol.

Aspect 18: Adhesive composition according to anyone of aspects 14 to 17, wherein the petroleum resin is selected from the group consisting of:
- C5 resin;
- C9 resin;
- C5/C9 resin;
- DCPD resin;
- mixtures thereof.

Aspect 19: Adhesive composition according to anyone of aspects 14 to 18, wherein the petroleum resin is not a DCPD resin.

Aspect 20: Adhesive composition according to anyone of aspects 14 to 19, wherein the petroleum resin is not hydrogenated.

Aspect 21: Adhesive composition according to anyone of aspects 14 to 20, wherein the petroleum resin is selected from C5 resins, C9 resins, and C5/C9 resins.

Aspect 22: Adhesive composition according to anyone of aspects 14 to 21, wherein the rosin esters are the glycerol esters of pale wood rosin, the glycerol esters of hydrogenated rosin, the glycerol esters of polymerized rosin, the pentaerythritol esters of pale wood rosin, the pentaerythritol esters of hydrogenated rosin, the pentaerythritol esters of tall oil rosin, the tall oil rosin esters obtained from a mixture of glycerol and pentaerythritol, the pale wood rosin esters obtained from a mixture of glycerol and pentaerythritol, the hydrogenated rosin esters obtained from a mixture of glycerol and pentaerythritol, the esters of polymerized rosin obtained from a mixture of glycerol and pentaerythritol, and the phenolic modified pentaerythritol esters of rosin.

Aspect 23: Adhesive composition according to anyone of aspects 14 to 22, wherein the rosin ester is the pentaerythritol or glycerol ester of gum rosin.

Aspect 24: Adhesive composition according to anyone of aspects 1 to 23, wherein the modified resin (B1) is prepared by reacting (or derived from):
- i) a gum rosin, a polyol selected from glycerol or pentaerythritol, and a petroleum resin selected from C5 resins, C9 resins, and C5/C9 resins, said petroleum resin being preferably not hydrogenated; or
- ii) a rosin ester resin based on glycerol or pentaerythritol, and a petroleum resin selected from C5 resins, C9 resins, and C5/C9 resins, said petroleum resin being preferably not hydrogenated.

Aspect 25: Adhesive composition according to anyone of aspects 1 to 24, wherein the tackifying resin (B) comprises from 40% to 100%, preferably from 60% to 100 %, more preferably from 80% to 100%, by weight of modified resin (B1) relative to the total weight of the tackifying resin (B).

Aspect 26: Adhesive composition according to anyone of aspects 1 to 25, wherein it comprises from 1% to 70% by weight, more preferably from 10% to 60% by weight, and even more preferably from 20% to 60% by weight of tackifying resin (B), based on the total weight of the adhesive composition.

Aspect 27 : Adhesive composition according to anyone of aspects 1 to 26, wherein it further comprises a plasticizer (C1).

Aspect 28 : Adhesive composition according to aspect 27, wherein the plasticizer (C1) is selected from the group consisting of: olefin oligomers, low molecular weight polyolefins such as liquid polybutene, low molecular weight non-aromatic polymers, phthalates, mineral oils, waxes, vegetable and animal oils and derivatives thereof.

Aspect 29 : Adhesive composition according to aspect 27 or 28, wherein the plasticizer (C1) in the adhesive composition is selected from mineral oils or waxes.

Aspect 30 : Adhesive composition according to anyone of aspects 1 to 29, wherein it comprises from 0% to 50% by weight of a plasticizer (C1), preferably from 1% to 40% by weight, more preferably from 5% to 20% by weight based on the total weight of the adhesive composition. Aspect 31 : Adhesive composition according to anyone of aspects 1 to 30, wherein it does not comprise polycaprolactones.

Aspect 32 : Adhesive composition according to anyone of aspects 1 to 31, wherein it is a hot melt adhesive composition, a pressure-sensitive adhesive composition (PSA), a hot melt pressure adhesive composition (HMPSA), preferably it is a hot melt pressure sensitive adhesive composition or a hot melt adhesive composition.

Aspect 33 : Adhesive composition according to anyone of aspects 1 to 32, wherein it is a hot melt pressure sensitive adhesive composition, comprising:
- from 10% to 70% by weight of a polymer (A), said polymer (A) being selected from styrene block copolymers ;
- from 1% to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

Aspect 34 : Adhesive composition according to anyone of aspects 1 to 32, wherein it is a hot melt adhesive composition comprising:
- from 10% to 70% by weight of a polymer (A), said polymer (A) being selected from ethylene-based copolymers ;
- from 1% to 70% by weight of a tackifying resin (B) comprising a modified resin (B1) and optional petroleum resin (B2);
- from 0% to 50% by weight of a plasticizer (C1); and
- from 0% to 5% by weight of antioxidant (C2).

Aspect 35 : Adhesive composition according to anyone of aspects 1 to 34, wherein it has a viscosity at 170°C ranging from 500 to 10 000 mPas, more preferably ranging from 600 to 8 000 mPas.

Aspect 36 : Use of the adhesive composition as defined in any one of aspects 1 to 34 for bonding two substrates together, or as a coating on the surface of a substrate.

Aspect 37 : Use according to aspect 36 in various applications, including but not limited to disposables articles, packaging (e.g cases, cartons, trays, ...), converting, laminates, pressure sensitive adhesives, tapes, labels, assembling, bookbinding, wood bonding (e.g. edge banding, profile wrapping, ...), transportation, reflective coatings, road marking, and the like.

Aspect 38 : Article comprising the adhesive composition according to anyone of aspects 1 to 36.

Aspect 39 : Article according to aspect 38, selected from the group consisting of a tape, a label, a case, a carton, a bag, and a disposable absorbent article.

The ranges disclosed in this description include both the lower and the upper limit thereof. For example, the expressions "ranging from x to y" or "between x and y" comprises the limits x and y.

The following examples illustrate the invention without limiting it.

### EXPERIMENTAL PART

The raw materials shown in Table were used.

**Table 1. Raw materials**

| **Ingredient** | **Name** | **Supplier** | **Nature** |
|---|---|---|---|
| (A1) | HAI-SIS^{™} JH-8161 | Jinhai | Styrene-isoprene block copolymer (SIS) |
| (A2) | UE653-04 | USI | Ethylene vinyl acetate (EVA) copolymer |
| (B1) | KOMOTAC^{®} KE100H | KOMO | modified resin |
| | | | Softening point: 97∼105°C; acid value: <30 mg/g; melt viscosity at 150°C: 800-2000mPas; gardner color: 3-4 |
| (B2)-1 | M-90Z | Luhua | Petroleum resin: C5/C9 hydrocarbon resin |
| (B2)-2 | HH2-1003 | Henghe | Petroleum resin: C5/C9 hydrocarbon resin |
| (B3)-1 | Sylvalite^{®} RE100L | Kraton | Rosin ester resin: pentaerythritol based tall-oil rosin ester |
| (B3)-2 | GA100DN | Arakama | Rosin ester resin: pentaerythritol based gum rosin ester |
| (C1)-1 | N4010 | Karamay | Naphthenic rubber oil (plasticizer) |
| (C1)-2 | SX105 | Fisher | Synthetic Hard Paraffin Wax (plasticizer) |
| (C2)-1 | CHINOX 1010 | Double bond | Antioxidant |
| (C2)-2 | CHINOX 168 | Double bond | Antioxidant |

### Testing methods:

Gardner color is measured according to standard ASTM D1544 - 04
Acid value is measured according to standard GB/T 2895-2008
Softening point is measured according to standard GB/T 15332-1994
Viscosity is measured according to standard GB/T 2794-2013
Rheology was used to analyze the viscoelastic properties of the materials.

Temperature Scan was used for the adhesive compositions: A temperature scan was run on apparatus TA DHR-2 from 140°C to -10°C at 10rad/s on 25mm parallel plates. The cooling rate from 140°C to 40°C was set at 5°C/min and the cooling rate from 40°C to -10°C was set at 2°C/min.

Adhesive strength: 180° peel test

The adhesive strength of the adhesive compositions is evaluated by the 180° peel test on a plate of a certain substrate, as described in the FINAT test method No. 1 (FTM 1), published in the FINAT Technical Handbook, 6^{th} edition, 2001. FINAT is the International Federation of Self-Adhesive Label Manufacturers and Converters.

The principle of this test is as follows: A support layer consisting of a 50 µm thick PET film is precoated with the adhesive composition in an amount of 18 g/m².

A test specimen in the form of a rectangular strip (25.4 mm × 175 mm) is cut from the self-adhesive support thus obtained. This test specimen is fastened to a plate consisting of a certain substrate. The assembly obtained is left at ambient temperature for 20 minutes. It is then introduced into a tensile testing device capable of performing the peeling or detachment of the strip at an angle of 180° and with a separation speed of 300 mm per minute. The device measures the force required to detach the strip under these conditions.

The result is expressed in N/2.54 cm and is indicated, along with the nature of the substrate of the plate.

### Immediate tack: loop tack test

The immediate tack of the compositions is evaluated by the loop tack test described in FINAT test method No. 9 (FTM9).

A support layer consisting of a 50 µm thick PET film is precoated with the HMPSA in an amount of 18 g/m² so as to obtain a rectangular strip of 25.4 mm by 175 mm. The two ends of this strip are joined together so as to form a loop, the adhesive layer of which is facing outward. The two joined ends are placed in the movable jaw of a tensile testing device capable of imposing a rate of displacement of 300 mm/minute along a vertical axis with the possibility of back-and- forth motion. The lower part of the loop placed in the vertical position is first brought into contact with a horizontal plate of a certain substrate of 25 mm by 30 mm over a square area measuring about 25 mm per side. Once this contact has been established, the direction of displacement of the jaw is reversed. The immediate tack is the maximum value of the force required for the loop to become completely detached from the substrate plate.

The result is expressed in N/2.54 cm and is indicated, along with the nature of the substrate of the horizontal plate.

In the 180° peel strength test, loop tack test, experiments were carried out for each HMPSA composition. The coating conditions used for each of these experiments are the following:

| Application nozzle | Substrates: Primary / Secondary | Temperature (°C) | Hot air (°C) | Width (mm) | Add-on (g/m²) | O.T. (s) |
|---|---|---|---|---|---|---|
| Slot die | 50mm PET film/ release liner | 170 | 170 | 50 | 18 | 0.8 |

| | | | | | | |
|---|---|---|---|---|---|---|
| *Temperature"* is the temperature of the tank containing the adhesive composition to be applied. *"Width"* is the width of the coating of the HMPSA on the primary substrate. *"Add-on"* is the amount of HMPSA coated on the primary substrate. "O.T." stands for opening time, which is the time that the HMPSA coated on the primary substrate takes to travel from the nozzle to the compression zone where the secondary substrate is applied on the HMPSA. | | | | | | |

### Fiber tear percentage test:

The carton substrates were cut to standard size 45mm×75mm. The adhesive was melt, then applied as bead through nozzle of a glue gun (1mm-1.5mm, melt for 30 min) on standard pieces, outside of the carton. The bead was about 3gram per linear meter, about 40mm long. The second substrate was applied, opposite side, and pressed with 1kg weight for about 3 seconds. After bonding specimen was idle at 23°C for 2 hours, then put at 5 °C, 20 °C and 50 °C (refrigerator or oven) for 24 hours. After 24h, the substrates of the construction were then separated from one another at the test temperature (e.g., immediately after removing the sample from the conditioning chamber) by pulling the two substrates apart from one another by hand. The surface of the adhesive composition is observed and the percentage of the surface area of the adhesive composition that is covered by fibers is determined and recorded. A minimum of three samples were prepared and tested for each adhesive composition. The results are reported in units of percent fiber tear.

### Example 1: Preparation of SBC-based HMPSA E1 and E2 (invention) and comparative composition CE1 and CE2

The adhesive compositions in Table 1 below were prepared as follows: polymer A1 was added into a mixture of plasticizer and antioxidants already heated at a temperature of 165°C. After obtention of homogenous mixture (90 min), the resins were added in two or three times, and the mixture was stirred for 1 hour.

In the table, the % are weight percentage based on the total weight of the hot melt adhesive composition.

**Table 2: HMPSA**

| | **E1** | **E2** | **CE1 (comparative**) | **CE2 (comparative**) |
|---|---|---|---|---|
| **Ingredients (%)** | | | | |
| (A1) | 30 | 30 | 30 | 30 |
| (B1) | 49 | 25 | - | - |
| (B2)-1 | - | 24 | - | 24 |
| (B3)-1 | - | - | 49 | 25 |
| (C1)-1 | 20 | 20 | 20 | 20 |
| (C2)-1 | 0.5 | 0.5 | 0.5 | 0.5 |
| (C2)-2 | 0.5 | 0.5 | 0.5 | 0.5 |
| Total | 100 | 100 | 100 | 100 |

| Properties | | | | |
|---|---|---|---|---|
| Viscosity at 170°C (mPas) | 6763 | 5412 | 5938 | 5763 |
| Softening point (°C) | 88.7 | 95.8 | 82.8 | 94.3 |
| | | | | |
| 180° peel-SS (stainless steel), PET | 18.7 PS** | 23 CF | 18.5 PS | 18.3 PS |
| 180° peel-HDPE, PET | 7.6 CP | 8.5 CP | 8.6 CP | 8.1 CP |
| Loop tack-SS, PET | 21.7 CP | 23.7 CP | 19.7 CP | 22.9 CP |
| Loop tack-HDPE, PET | 12.2 CP | 10.2 CP | 11.8 CP | 12.5 CP |

| | | | | |
|---|---|---|---|---|
| CP* : Clear Panel - no visible stain on panel *CF: Cohesive Failure - the adhesive film is split during the test, leaving residue of adhesive on both the panel and the front material. **PS : Panel Stain - discoloration of test area, but no tacky residue. | | | | |

### Example 2: Preparation of EVA-based HMA for rigid package application E3

The adhesive composition E3 was prepared by blending of the raw materials at 165°C for 2 hours.

**Table 3: EVA-based adhesives**

| | **E3** | **CE3 (comparative**) | **CE4 (comparative**) |
|---|---|---|---|
| **Ingredients (%)** | | | |
| (A2) | 35 | 35 | 35 |
| (B1) | 44.5 | - | - |
| (B2)-2 | - | - | 44.5 |
| (B3)-2 | - | 44.5 | - |
| (C1)-2 | 20 | 20 | 20 |
| (C2) | 0.5 | 0.5 | 0.5 |
| TOTAL | 100 | 100 | 100 |

| **Properties** | | | |
|---|---|---|---|
| Viscosity at 170°C (mPas) | 907 | 1000 | 970 |
| Softening point (°C) | 112.9 | 115.2 | 114 |
| Carton-printed fiber tear, %, 20°C | 80 | 70 | 50 |
| Carton-printed fiber tear, %, 50°C | 80 | 80 | 80 |

Adhesive composition E3 comprising the modified rosin (B1) advantageously exhibits high fiber tear percentage on a range of temperature from 20°C to 50°C.

## Claims

1. Adhesive composition comprising:
- a polymer (A) ;
- a tackifying resin (B) comprising a modified resin (B1).

2. Adhesive composition according to claim 1, wherein the polymer (A) is selected from the group consisting of: polyolefin-based polymers, styrene block copolymers, polyurethanes, polyamides, acrylic-based copolymers, and mixtures thereof, more preferably from the group consisting of: ethylene-vinyl acetate copolymers (EVA), styrene block copolymers, and mixtures thereof.

3. Adhesive composition according to anyone of claims 1 to 2, wherein the polymer (A) has a weight average molecular weight higher than or equal to 15 000 g/mol.

4. Adhesive composition according to anyone of claims 1 to 3, wherein the modified resin (B1) is not hydrogenated.

5. Adhesive composition according to anyone of claims 1 to 4, wherein the modified resin (B1) has an acid value ranging from 5 to 32 mg KOH/g, preferably from 10 to 30 mg KOH/g, and more preferably from 12 to 20 mg KOH/g.

6. Adhesive composition according to anyone of claims 1 to 5, wherein the modified resin (B1) has an average molecular weight (Mw) lower than or equal to 10000 g/mol, preferably lower than or equal to 5 000 g/mol, and more preferably lower than or equal to 2 000 g/mol.

7. Adhesive composition according to anyone of claims 1 to 6, wherein the modified resin (B1) is prepared by reacting :
i) a rosin resin, a polyol, and a petroleum resin; or
ii) a rosin ester resin and a petroleum resin.

8. Adhesive composition according to claim 7, wherein:
- in reaction i), the weight ratio rosin resin : petroleum resin ranges from 99 : 1 to 55:45;
- in reaction ii), the weight ratio rosin ester resin: petroleum resin ranges from 99 : 1 to 55 : 45.

9. Adhesive composition according to anyone of claims 7 or 8, wherein the petroleum resin is selected from C5 resins, C9 resins, and C5/C9 resins.

10. Adhesive composition according to anyone of claims 1 to 9, wherein the modified resin (B1) is prepared by reacting :
- i) a gum rosin, a polyol selected from glycerol or pentaerythritol, and a petroleum resin selected from C5 resins, C9 resins, and C5/C9 resins, said petroleum resin being preferably not hydrogenated; or
- ii) a rosin ester resin based on glycerol or pentaerythritol, and a petroleum resin selected from C5 resins, C9 resins, and C5/C9 resins, said petroleum resin being preferably not hydrogenated.

11. Adhesive composition according to anyone of claims 1 to 10, wherein it comprises from 1% to 70% by weight, more preferably from 10% to 60% by weight, and even more preferably from 20% to 60% by weight of tackifying resin (B), based on the total weight of the adhesive composition.

12. Adhesive composition according to anyone of claims 1 to 11, wherein it further comprises a plasticizer (C1), preferably selected from the group consisting of: olefin oligomers, low molecular weight polyolefins such as liquid polybutene, low molecular weight non-aromatic polymers, phthalates, mineral oils, waxes, vegetable and animal oils and derivatives thereof.

13. Adhesive composition according to anyone of claims 1 to 12, wherein it does not comprise polycaprolactones.

14. Adhesive composition according to anyone of claims 1 to 13, **characterized in that** it is a hot melt adhesive composition, a pressure-sensitive adhesive composition (PSA), a hot melt pressure adhesive composition (HMPSA), preferably it is a hot melt pressure sensitive adhesive composition or a hot melt adhesive composition.

15. Use of the adhesive composition as defined in any one of claims 1 to 14 for bonding two substrates together, or as a coating on the surface of a substrate.

16. Article comprising the adhesive composition according to anyone of claims 1 to 14, preferably selected from the group consisting of a tape, a label, a case, a carton, a bag, and a disposable absorbent article.
